(19) Europäisches Patentamt / European Patent Office / Office européen des brevets

(11) **EP 2 571 935 B1**

## (12) EUROPEAN PATENT SPECIFICATION

(45) Date of publication and mention
of the grant of the patent:
**17.12.2014 Bulletin 2014/51**

(21) Application number: **11782956.4**

(22) Date of filing: **19.05.2011**

(51) Int Cl.:
*C08L 23/28* (2006.01)    *C08L 23/16* (2006.01)
*C08F 8/22* (2006.01)    *C08L 23/04* (2006.01)

(86) International application number:
**PCT/CN2011/074326**

(87) International publication number:
**WO 2011/144039 (24.11.2011 Gazette 2011/47)**

(54) **THERMOPLASTIC COMPOSITIONS AND FORMED ARTICLES THEREOF**

THERMOPLASTISCHE ZUSAMMENSETZUNGEN UND FORMARTIKEL DARAUS

COMPOSITIONS THERMOPLASTIQUES ET ARTICLES FORMÉS À PARTIR DE CELLES-CI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.05.2010 PCT/CN2010/073043**

(43) Date of publication of application:
**27.03.2013 Bulletin 2013/13**

(73) Proprietor: **Dow Global Technologies LLC
Midland, MI 48674 (US)**

(72) Inventors:
• **PENG, Shuwen
Shanghai 200135 (CN)**

• **REGO, Jose M.
Houston, Texas 77041 (US)**

(74) Representative: **Boult Wade Tennant
Verulam Gardens
70 Gray's Inn Road
London WC1X 8BT (GB)**

(56) References cited:
**WO-A2-2008/079784    US-A- 3 641 216
US-A- 4 698 392    US-A- 4 778 856
US-A- 4 978 703    US-A1- 2003 153 687
US-A1- 2004 236 022    US-A1- 2004 236 022
US-A1- 2006 122 316    US-A1- 2009 143 535
US-B1- 6 204 334**

**Description**

BACKGROUND OF THE INVENTION

Many inflated bladders or articles, for example swimming pool liners and air beds, require flexibility and good high frequency weldability. Polyvinylchloride (PVC)-based formulations are the current formulations for such applications. Typical flexible PVC compositions contain PVC powder, oil, fillers, optional rubbers, and plasticizers, such as dioctyl phthalate (DOP or DINP). However, in these PVC compositions, the plasticizers, such as DOP, can migrate to the surface of an article, creating environmental issues and health issues. In addition, these PVC parts will become brittle due to loss of plasticizer. A plasticizer may also impair the aging performance of the final article. Thus, there is a need for new polymer formulations that have good flexibility and good high frequency weldability, and do not require a plasticizer.

U.S. Publication No. 2004/0077791 A1 discloses a high frequency weldable thermoplastic rubber composition, which comprises the following: (A) a thermoplastic rubber comprising (i) a rubber, and (ii) a thermoplastic polyolefin homopolymer or copolymer; and (B) a polar modifier selected from the following: (a) thermoplastic polyurethane resins, (b) chlorinated polyolefin resins, (c) ethylene-vinyl acetate copolymers, (d) styrene-butadiene-acrylonitrile terpolymers, and (e) their mixtures. These compositions are complex, and typically require costly polar polymers to achieve compatibility and the desired welding properties.

U.S. Patent 5,446,064 discloses a thermoplastic elastomer composition comprising the following: 100 parts by weight of a crystalline chlorinated polyethylene, with a chlorination degree of from 20 to 45%, and a heat of crystal fusion from 5 to 35 cal/g; from 1 to 100 parts by weight of a crystalline polyolefin; and from 5 to 200 parts by weight of a plasticizer. The crystalline chlorinated polyethylene was obtained by chlorinating a polyethylene having a weight average molecular weight of from 100,000 to 750,000. These compositions require significant amounts of plasticizers to achieve the desired hardness (modulus).

U.S. Publication No. 2003/0153687 discloses polyvinyl chloride compositions comprising a vinyl chloride polymer and 2-8 parts of an impact modifier composition, which comprises at least one ethylene/alpha-olefin copolymer and at least one chlorinated olefin polymer per 100 parts of the vinyl chloride polymer. Preferably the impact modifier composition comprises less than one part of the ethylene/alpha-olefin copolymer, and the ratio of said copolymer to the total modifier composition is less than 25%.

CN Application No. 88104293.5 discloses a co-blended composite material of polyolefin and its preparation method, prepared by melting and co-blending polyolefin and chlorinated polyolefin with a proper amount of stabilizer and optional fillers.

JP2000-273254 discloses a thermoplastic elastomer that contains (A) a crystalline chlorinated polyethylene, in an amount of 100 pts.wt. and (B) an ethylene/$\alpha$-olefin copolymer, obtained by copolymerization using a metalocene catalyst, in an amount of 10-1000 pts.wt., and further, preferably, (C) a crystalline polyolefin resin (preferably, crystalline polypropylene resin) in an amount of 10-1000 pts.wt. The component A preferably comprises a post-chlorinated polyethylene having a weight-average molecular weight of 100,000-750,000.

U.S. Publication No. 2004/0236022 discloses polyvinyl chloride compositions comprising a) a vinyl chloride polymer, b) at least one ethylene/alpha-olefin copolymer, said copolymer having a density of 0. 858 to 0.91 g/cc and having a melt index from an I10 value of 0.1 to an I2 value of 10, and c) at least one randomly chlorinated olefin polymer having a chlorine content of from 20-40 percent by weight. The feedstock for said chlorinated olefin polymer has a melt index from an I10 value of 0.1 to an I2 value of 10. Optionally, these impact resistant polyvinyl chloride compositions may have inorganic filler levels from 5 to 50 parts per hundred relative to the polyvinyl chloride polymer.

U.S. Patent 4,698,392 discloses a curable polymeric composition comprising 50-90 parts by weight chlorinated polyethylene or chlorosulfonated polyethylene, containing 30-45 weight percent chlorine, and 10-50 parts by weight of an ethylene terpolymer of 48-74 weight percent ethylene, 20-40 weight percent alkyl acrylate (the alkyl group contains 4-9 carbon atoms), and 6-12 weight percent carbon monoxide or sulfur dioxide. Additional compositions are disclosed in U.S. Patent 6,162,865; International Publication No. WO 2008/002952; and JP11157398A (Abstract).

As discussed above, there is a need for new polymer formulations that have good flexibility and good "high frequency weldability," but do not require a plasticizer. There is a further need for such compositions that do not require costly polar polymers or other compatibilizers. These needs and others have been met by the following invention.

SUMMARY OF THE INVENTION

The invention provides a composition comprising the following:

A) 30 to 80 wt%, based on the weight of the polymer components of the composition, of a chlorinated ethylene-based polymer; and
B) 20 to 70 wt%, based on the weight of the polymer components of the composition, of an ethylene-based polymer wherein the ethylene-based polymer is an ethylene/α-olefin interpolymer or an ethylene/α-olefin multi-block polymer;

wherein the total chlorine content of the composition is greater than, or equal to, 13 weight percent, based on the total weight of polymers in the composition; and

wherein the composition comprises less than 1 wt% of a polyvinyl chloride.

DETAILED DESCRIPTION OF THE INVENTION

As discussed above, the invention provides a composition comprising the following:

A) 30 to 80 wt%, based on the weight of the polymer components of the composition, of a chlorinated ethylene-based polymer; and
B) 20 to 70 wt%, based on the weight of the polymer components of the composition, of an ethylene-based polymer wherein the ethylene-based polymer is an ethylene/α-olefin interpolymer or an ethylene/α-olefin multi-block polymer;

wherein the total chlorine content of the composition is greater than, or equal to, 13 weight percent, based on the total weight of polymers in the composition; and
wherein the composition comprises less than 1 wt% of a polyvinyl chloride.

An inventive composition may comprise a combination of two or more embodiments as described herein.

In one embodiment, the chlorine content of the composition is from 13 to 40 weight percent, based on the total weight of polymers in the composition.

In one embodiment, the chlorine content of the composition is from 15 to 35 weight percent, preferably from 17 to 32 weight percent, based on the total weight of polymers in the composition.

In one embodiment, Component A is present in an amount greater than, or equal to, 30 weight percent, preferably greater than, or equal to, 40 weight percent, based on the weight of Components A and B.

In one embodiment, Component A is present in an amount less than, or equal to, 80 weight percent, preferably less than, or equal to, 75 weight percent, based on the weight of Components A and B.

In one embodiment, Component A is present in an amount from 30 to 75 weight percent, preferably from 35 to 70 weight percent, based on weight of the composition.

In one embodiment, Component A is present in an amount from 40 to 60 weight percent, preferably from 40 to 55 weight percent, based on weight of the composition.

In one embodiment, Component B is present in an amount from 20 to 70 weight percent, preferably from 40 to 60 weight percent, based on the weight of Components A and B.

In one embodiment, Component B is present in an amount greater than, or equal to, 6 weight percent, or greater than, or equal to, 8 weight percent, or greater than, or equal to, 10 weight percent, based on the weight of the composition.

In one embodiment, Component B is present in an amount from 20 to 60 weight percent, preferably from 25 to 55 weight percent, based on weight of the composition.

In one embodiment, Component B is present in an amount greater than, or equal to, 25 weight percent, or greater than, or equal to, 30 weight percent, or greater than, or equal to, 35 weight percent, or greater than, or equal to, 40, based on the weight of the Components A and B.

In one embodiment, Component B is present in an amount greater than, or equal to, 25 weight percent, or greater than, or equal to, 30 weight percent, or greater than, or equal to, 35 weight percent, or greater than, or equal to, 40, based on the weight of the composition. In one embodiment, the ethylene-based polymer of Component B has a melting point (Tm) greater than 60°C, preferably greater than 70°C.

In one embodiment, the ethylene-based polymer of Component B has a melting point (Tm) greater than 80°C, preferably greater than 90°C.

In one embodiment, the ethylene-based polymer of Component B has a melting point (Tm) less than 150°C, preferably less than 125°C.

In one embodiment, the ethylene-based polymer of Component B has a density from 0.855 to 0.910 g/cc, preferably from 0.860 to 0.905 g/cc, and more preferably from 0.870 to 0.905 g/cc (1cc = 1 cm$^3$).

In one embodiment, the ethylene-based polymer of Component B has a density from 0.860 to 0.940 g/cc, or from 0.865 to 0.930 g/cc, or from 0.870 to 0.920 g/cc (1cc = 1 cm$^3$).

In one embodiment, Components A and B are present in an amount greater than, or equal to, 60 weight percent, preferably greater than, or equal to, 65 weight percent, more preferably greater than, or equal to, 70 weight percent, based on the weight of the composition.

In one embodiment, Components A and B are present in an amount greater than 85 weight percent, preferably greater than 90 weight percent, more preferably greater than 95, based on the weight of the polymer components of the composition.

In one embodiment, Components A and B are present in an amount greater than, or equal to, 98 weight percent, based on the weight of the polymer components of the composition.

In one embodiment, the weight ratio of Component A to Component B is from 0.67 to 1.5, or from 0.75 to 1.3, or from 0.80 to 1.1.

In one embodiment, the ethylene-based polymer of Component B has a melt index ($I_2$) from 0.1 to 10 g/10 min, preferably from 0.1 to 5 g/10 min, and more preferably from 0.1 to 2 g/10 min. Preferably, the ethylene-based polymer has a melt from 0.1 to 10 g/10 min for optimal melt viscosities for fabrication of sheets.

In one embodiment, the ethylene-based polymer is an ethylene/$\alpha$-olefin interpolymer. In a further embodiment, the ethylene/$\alpha$-olefin interpolymer is an ethylene/$\alpha$-olefin copolymer. In one embodiment, the $\alpha$-olefin is selected from propylene, 1-butene, 1-hexene or 1-octene.

In one embodiment, the ethylene/$\alpha$-olefin interpolymer is a homogeneously branched linear ethylene/$\alpha$-olefin interpolymer, and preferably a copolymer; or a homogeneously branched substantially linear ethylene/$\alpha$-olefin interpolymer, and preferably a copolymer. In one embodiment, the $\alpha$-olefin is selected from propylene, 1-butene, 1-hexene or 1-octene.

In one embodiment, the ethylene/$\alpha$-olefin interpolymer is a homogeneously branched linear ethylene/$\alpha$-olefin interpolymer, and preferably a copolymer. In one embodiment, the $\alpha$-olefin is selected from propylene, 1-butene, 1-hexene or 1-octene.

In one embodiment, the ethylene/$\alpha$-olefin interpolymer is a homogeneously branched substantially linear ethylene/$\alpha$-olefin interpolymer, and preferably a copolymer. In a further embodiment, the ethylene/$\alpha$-olefin interpolymer, and preferably a copolymer, has a PRR (Processing Rheology Ratio) value greater than, or equal to, 8, preferably greater than, or equal to, 12, and more preferably greater than, or equal to, 15. In one embodiment, the $\alpha$-olefin is selected from propylene, 1-butene, 1-hexene or 1-octene.

In one embodiment, the ethylene/$\alpha$-olefin interpolymer is a homogeneously branched substantially linear ethylene/$\alpha$-olefin interpolymer, and preferably a copolymer. In a further embodiment, the ethylene/$\alpha$-olefin interpolymer, and preferably a copolymer, has a PRR (Processing Rheology Ratio) value greater than, or equal to, 3.0, or greater than, or equal to, 3.5, or greater than, or equal to, 4.0, or greater than, or equal to, 4.5. In one embodiment, the $\alpha$-olefin is selected from propylene, 1-butene, 1-hexene or 1-octene. In one embodiment, the ethylene-based polymer is an ethylene/$\alpha$-olefin multi-block copolymer. In a further embodiment, the $\alpha$-olefin is selected from propylene, 1-butene, 1-hexene or 1-octene.

In a preferred embodiment, the composition does not contain a plasticizer. Examples of plasticizers include oils and low molecular weight (Mn $\leq$ 600 g/mole) hydrocarbons. Plasticizers include di-2-ethylhexyl phthalate, di-n-octyl phthalate, diisodecyl phthalate, dibutyl phthalate, dihexyl phthalate, dioctyl adipate, dioctyl sebacate, trimellitate plasticizers, epoxidized soybean oils, epoxidized linseed oils, triphenyl phosphate, trixylyl phosphate, and tricresyl phosphate.

In one embodiment, the composition does not contain a polyurethane.

In one embodiment, the composition does not contain a polar polymer selected from polyurethanes, ethylene vinyl acetates, vinyl acetates, polyesters or polyamides.

The composition comprises less than 1 weight percent, preferably less than 0.1 weight percent of a polyvinyl chloride.

In one embodiment, the composition does not contain a polyvinyl chloride.

In one embodiment, the composition does not contain a non-chlorinated ethylene-based polymer functionalized with maleic anhydride or maleic acid or derivatives thereof.

In one embodiment, the composition does not contain a non-chlorinated propylene-based polymer functionalized with maleic anhydride or maleic acids or derivatives thereof.

In one embodiment, the composition comprises less than 1 weight percent, preferably less than 0.1 weight percent of an oil.

In one embodiment, the composition does not contain an oil.

In one embodiment, the composition comprises less than 1 weight percent, preferably less than 0.1 weight percent of a phthalate.

In one embodiment, the composition does not contain a phthalate. In one embodiment, the composition further comprises a propylene-based polymer. In a further embodiment, the propylene-based polymer is a propylene/ethylene interpolymer, and preferably a propylene/ethylene copolymer.

In one embodiment, the composition comprises less than 2 weight percent, preferably less than 1 weight percent of a propylene-based polymer.

In one embodiment, the composition does not contain a propylene-based polymer. In one embodiment, the composition further comprises a heterogeneously branched ethylene/a-olefin interpolymer, and preferably a copolymer. In a further embodiment, the $\alpha$-olefin is selected from propylene, 1-butene, 1-hexene or 1-octene.

In one embodiment, the composition further comprises a heterogeneously branched ethylene/$\alpha$-olefin interpolymer, and preferably a copolymer. In a further embodiment, the heterogeneously branched ethylene/$\alpha$-olefin interpoly-

mer, and preferably a copolymer, is present in an amount from 1 to 20 weight percent, or from 2 to 10 weight percent, or from 3 to 5 weight percent, based on the total weight of polymers in the composition. In a further embodiment, the $\alpha$-olefin is selected from propylene, 1-butene, 1-hexene or 1-octene.

Heterogeneously branched linear ethylene/$\alpha$-olefin interpolymers differ from the homogeneously branched ethylene/$\alpha$-olefin interpolymers (discussed below), primarily in their comonomer branching distribution. For example, heterogeneously branched interpolymers have a branching distribution, in which the polymer molecules do not have the same comonomer-to-ethylene ratio. For example, heterogeneously branched LLDPE polymers have a distribution of branching, including a highly branched portion (similar to a very low density polyethylene), a medium branched portion (similar to a medium branched polyethylene) and an essentially linear portion (similar to linear homopolymer polyethylene). Heterogeneously branched ethylene-based interpolymers are typically prepared with a Ziegler/Natta catalyst system. These linear interpolymers lack long chain branching, or measureable amounts of long chain branching.

In one embodiment, the composition further comprises at least one polymer selected from the group consisting of the following: polypropylene homopolymers, propylene/ethylene copolymers, low density polyethylenes (LDPEs), high density polyethylenes (HDPEs), and a heterogeneously branched ethylene/$\alpha$-olefin copolymers. In a further embodiment, the at least one polymer is present in an amount from 1 to 20 weight percent, preferably from 1 to 15 weight percent, based on the weight of the composition.

In one embodiment, the composition further comprises at least one additive. In a further embodiment, the additive is selected from antioxidants, stabilizers, pigments, fillers, or combinations thereof. In a further embodiment, the at least one additive is present in an amount from 0.1 to 5 weight percent, preferably from 0.1 to 1 weight percent, based on the weight of the composition.

In one embodiment, the composition further comprises a filler. In a further embodiment, the filler is selected from the group consisting of $CaCO_3$, clay, talc, carbon black, and combinations thereof. In one embodiment, the filler is present in an amount from 1 to 50 weight percent, preferably 1 to 30 weight percent, based on the weight of the composition.

In one embodiment, the composition further comprises a filler. In a further embodiment, the filler is selected from the group consisting of $CaCO_3$, $TiO_2$, clay, talc, carbon black, and combinations thereof. In one embodiment, the filler is present in an amount from 1 to 50 weight percent, preferably 1 to 30 weight percent, based on the weight of the composition.

In one embodiment, the composition further comprises a filler. In a further embodiment, the filler is present in an amount from 5 to 50 weight percent, or from 5 to 40 weight percent, or from 5 to 30 weight percent, based on the weight of the composition. In a further embodiment, the filler is selected from the group consisting of $CaCO_3$, $TiO_2$ clay, talc, carbon black, and combinations thereof.

In one embodiment, the composition further comprises a filler. In a further embodiment, the filler is present in an amount from 0.5 to 50 weight percent, or from 0.5 to 10 weight percent, or from 0.5 to 5 weight percent, or from 0.5 to 3 weight percent, based on the weight of the composition. In a further embodiment, the filler is selected from the group consisting of $CaCO_3$, $TiO_2$, clay, talc, carbon black, and combinations thereof. An inventive composition may comprise a combination of two or more embodiments as described herein.

The invention also provides an article comprising at least one component formed from an inventive composition.

In one embodiment, the article has a weld strength greater than 6 MPa, preferably greater than 7 MPa.

In one embodiment, the article is a sheet.

In one embodiment, the article is a swimming pool liner.

An inventive article may comprise a combination of two or more embodiments as described herein.

It has been discovered that the inventive compositions have surprisingly good "high frequency weld strength," good heat resistance, and good stress whitening, comparable to an incumbent PVC-based composition. Also, it has been discovered that the inventive compositions have better abrasion resistance and comparable puncture strength, as compared to the PVC-based composition. In addition, the inventive compositions do not require the addition of a plasticizer, and the low glass transition temperature of the inventive compositions should improve the low-temperature flexibility of articles, or components thereof, formed from these compositions. The inventive compositions can also be use on current processing lines, without the need for costly modifications.

Chlorinated Ethylene-Based Polymers (Component A)

The chlorinated ethylene-based polymer may comprise two or more embodiments as described herein.

Representative chlorinated ethylene-based polymers include the following: a) chlorinated and chlorosulfonated homopolymers of ethylene, and b) chlorinated and chlorosulfonated copolymers of ethylene and at least one ethylenically unsaturated monomer selected from the group consisting of C3-C10 alpha mono-olefins. Chlorinated and chlorosulfonated graft copolymers are included as well.

Some examples of suitable polymers include chlorinated polyethylene; chlorosulfonated polyethylene; chlorinated copolymers of ethylene with propylene, butene, 3-methyl-1-pentene, or octene; and chlorosulfonated copolymers of ethylene with propylene, butene, 3-methyl-1-pentene or octene. Examples of chlorinated ethylene-based polymers include the TRYIN Chlorinated Polyethylenes available from The Dow Chemical Company. Some other examples of chlorinated ethylene-based polymers are described in US Patent Nos. 4,412,448; 4,767,823; 5,242,987; 5,446,064; 6,204,334, 6,706,815, and International Publication No. WO 2008/002952.

In one embodiment, the chlorinated ethylene-based polymer is a chlorinated ethylene homopolymer or a chlorosulfonated ethylene homopolymer. In a further embodiment, the ethylene homopolymer, used to form the chlorinated polymer, is a high density polyethylene (HDPE).

In one embodiment, the chlorinated ethylene-based polymer is a chlorinated ethylene homopolymer. In a further embodiment, the ethylene homopolymer, used to form the chlorinated polymer, is a high density polyethylene (HDPE).

In one embodiment, the amount of chlorination, based on the weight of the chlorinated ethylene-based polymer, is greater than, or equal to, 20 weight percent, preferably greater than, or equal to, 25 weight percent, and more preferably greater than, or equal to, 30 weight percent, based on the total weight of the chlorinated polymer. In a preferred embodiment the ethylene-based polymer, used to form the chlorinated polymer, is an ethylene homopolymer, and preferably a high density polyethylene (HDPE).

In one embodiment, the amount of chlorination, based on the weight of the chlorinated ethylene-based polymer, is less than, or equal to, 50 weight percent, preferably less than, or equal to, 47 weight percent, and more preferably less than, or equal to, 45 weight percent, based on the total weight of chlorinated polymer. In a preferred embodiment the ethylene-based polymer, used to form the chlorinated polymer, is an ethylene homopolymer, and preferably a HDPE.

In one embodiment, the chlorinated ethylene-based polymer contains from 20 to 50 weight percent chlorine, preferably from 25 to 47 weight percent, and more preferably from 30 to 45 weight percent, based on the total weight of polymer. In a preferred embodiment the ethylene-based polymer, used to form the chlorinated polymer, is an ethylene homopolymer, and preferably a HDPE.

In one embodiment, the chlorinated ethylene-based polymer has a residual crystallinity less than 5 percent, preferably less than 3 percent as determined by DSC. In a preferred embodiment, the ethylene-based polymer, used to form the chlorinated polymer, is an ethylene homopolymer, and preferably a HDPE.

In one embodiment, the chlorinated ethylene-based polymer has a residual crystallinity less than 2 percent, preferably less than 1 percent, as determined by DSC. In a preferred embodiment, the ethylene-based polymer, used to form the chlorinated polymer, is an ethylene homopolymer, and preferably a HDPE.

In one embodiment, the chlorinated ethylene-based polymer has a crystallization temperature, Tc, from 2°C to 60°C. In a preferred embodiment, the ethylene-based polymer, used to form the chlorinated polymer, is an ethylene homopolymer, and preferably a HDPE.

In one embodiment, the chlorinated ethylene-based polymer has a melt viscosity, measured at 190°C and a shear rate of 145 sec$^{-1}$, from 4,000 to 50,000 P, preferably from 5,000 to 40,000 P, and more preferably from 6,000 to 30,000 P. In a preferred embodiment, the ethylene-based polymer, used to form the chlorinated polymer, is an ethylene homopolymer, and preferably a HDPE.

A chlorinated ethylene-based polymer may comprise a combination of two or more embodiments as described herein.

Ethylene-Based Polymer (Component B)

The ethylene-based polymer may comprise two or more embodiments as described herein.

The ethylene-based polymers include ethylene/α-olefin interpolymers, and preferably copolymers, and ethylene/a-olefin multiblock copolymers.

Commercial examples of suitable ethylene-base interpolymers include ENGAGE Polyolefin Elastomers, ATTANE Polyethylene Resins, AFFINITY Polyolefin Plastomers, DOWLEX Polyethylene Resins, ELITE Polyethylene Resins, and INFUSE Olefin Block Copolymers, each available from The Dow Chemical Company; EXCEED and EXACT polymers available from ExxonMobil Chemical Company; and TAFMER™ polymers available from the Mitsui Chemical Company.

In one embodiment, the ethylene-based polymer has a melting point (Tm) greater than 60°C, preferably greater than 70°C, as determined by DSC.

In one embodiment, the ethylene-based polymer has a melting point (Tm) greater than 80°C, preferably greater than 90°C, as determined by DSC.

In one embodiment, the ethylene-based polymer has a melting point (Tm) less than 150°C, preferably less than 125°C, as determined by DSC.

In one embodiment, the ethylene-based polymer has a density greater than, or equal to, 0.855 g/cc, preferably greater than, or equal to, 0.860 g/cc, more preferably greater than, or equal to, 0.870 g/cc.

In one embodiment, the ethylene-based polymer has a density greater than, or equal to, 0.870 g/cc, or greater than, or equal to, 0.880 g/cc, or greater than, or equal to, 0.890 g/cc.

In one embodiment, the ethylene-based polymer has a density less than, or equal to, 0.920 g/cc, preferably less than, or equal to, 0.915 g/cc, more preferably less than, or equal to, 0.910 g/cc.

In one embodiment, the ethylene-based polymer has a density less than, or equal to, 0.930 g/cc, or less than, or equal to, 0.925 g/cc, or less than, or equal to, 0.920 g/cc.

In one embodiment, the ethylene-based polymer has a density less than, or equal to, 0.910 g/cc, preferably less than, or equal to, 0.905 g/cc.

In one embodiment, the ethylene-based polymer has a melt index (I2) greater than, or equal to, 0.1 g/10 min, preferably greater than, or equal to, 0.2 g/10 min, more preferably greater than, or equal to, 0.4 g/10 min.

In one embodiment, the ethylene-based polymer has a melt index (I2) less than, or equal to, 10 g/10 min, preferably less than, or equal to, 5 g/10 min, more preferably less than, or equal to, 2 g/10 min.

In one embodiment, the ethylene-based polymer has a melt index (I2) from 0.01 to 10 g/10 min, or from 0.02 to 5 g/10 min, or from 0.05 to 2 g/10 min.

In one embodiment, the ethylene-based polymer has molecular weight distribution (Mw/Mn) from 1.1 to 5, preferably from 1.1 to 4, more preferably from 1.1 to 3, as determined by GPC.

In one embodiment, the ethylene-based polymer has a melt index ratio (I10/I2) from 7 to 14, or from 8 to 12.

In one embodiment, the ethylene-based polymer is an ethylene-based interpolymer, and preferably an ethylene-based copolymer.

Comonomers include, but are not limited to, propylene, isobutylene, 1-butene, 1-pentene, 1-hexene, 3-methyl-1-pentene, 4-methyl-1-pentene, and 1-octene, non-conjugated dienes, polyenes, butadienes, isoprenes, pentadienes, hexadienes (for example, 1,4-hexadiene), octadienes, styrene, halo-substituted styrene, alkyl-substituted styrene, tetrafluoroethylenes, vinylbenzocyclobutene, naphthenics, cycloalkenes (for example, cyclopentene, cyclohexene, cyclooctene), and mixtures thereof. Typically and preferably, the ethylene is copolymerized with one C3-C20 $\alpha$-olefin, and preferably one C3-C10 $\alpha$-olefin. Preferred comonomers include propene, 1-butene, 1-pentene, 1-hexene, 1-heptene and 1-octene, and more preferably include propene, 1-butene, 1-hexene and 1-octene.

In one embodiment, the ethylene-based polymer is an ethylene/$\alpha$-olefin interpolymer, and preferably an ethylene/$\alpha$-olefin copolymer.

Illustrative $\alpha$-olefins include propylene, 1-butene, 1-pentene, 1-hexene, 4-methyl-1-pentene, 1-heptene, 1-octene, 1-nonene and 1-decene. The $\alpha$-olefin is desirably a C3-C10 $\alpha$-olefin. Preferably, the $\alpha$-olefin is propylene, 1-butene, 1-hexene or 1-octene. Illustrative copolymers include ethylene/propylene (EP) copolymers, ethylene/butene (EB) copolymers, ethylene/hexene (EH) copolymers, ethylene/octene (EO) copolymers. Preferred copolymers include EP, EB, EH and EO polymers.

In one embodiment, the ethylene/$\alpha$-olefin interpolymer has a melting point (Tm) greater than 60°C, preferably greater than 70°C. In a further embodiment, the ethylene/$\alpha$-olefin interpolymer is an ethylene/$\alpha$-olefin copolymer.

In one embodiment, the ethylene/$\alpha$-olefin interpolymer has a melting point (Tm) greater than 80°C, preferably greater than 90°C. In a further embodiment, the ethylene/$\alpha$-olefin interpolymer is an ethylene/$\alpha$-olefin copolymer.

In one embodiment, the ethylene/$\alpha$-olefin interpolymer has a melting point (Tm) less than 150°C, preferably less than 125°C. In a further embodiment, the ethylene/$\alpha$-olefin interpolymer is an ethylene/$\alpha$-olefin copolymer.

In one embodiment, the ethylene/$\alpha$-olefin interpolymer has a density greater than, or equal to, 0.855 g/cc, preferably greater than, or equal to, 0.860 g/cc, more preferably greater than, or equal to, 0.870 g/cc. In a further embodiment, the ethylene/$\alpha$-olefin interpolymer is an ethylene/$\alpha$-olefin copolymer.

In one embodiment, the ethylene/$\alpha$-olefin interpolymer has a density less than, or equal to, 0.920 g/cc, preferably less than, or equal to, 0.915 g/cc, more preferably less than, or equal to, 0.910 g/cc. In a further embodiment, the ethylene/$\alpha$-olefin interpolymer is an ethylene/a-olefin copolymer.

In one embodiment, the ethylene/$\alpha$-olefin interpolymer has a density less than, or equal to, 0.910 g/cc, preferably less than, or equal to, 0.905 g/cc. In a further embodiment, the ethylene/$\alpha$-olefin interpolymer is an ethylene/$\alpha$-olefin copolymer.

In one embodiment, the ethylene/$\alpha$-olefin interpolymer has a melt index (I2) greater than, or equal to, 0.1 g/10 min, preferably greater than, or equal to, 0.2 g/10 min, more preferably greater than, or equal to, 0.4 g/10 min. In a further embodiment, the ethylene/a-olefin interpolymer is an ethylene/$\alpha$-olefin copolymer.

In one embodiment, the ethylene/$\alpha$-olefin interpolymer has a melt index (I2) less than, or equal to, 10 g/10 min, preferably less than, or equal to, 5 g/10 min, more preferably less than, or equal to, 2 g/10 min. In a further embodiment, the ethylene/$\alpha$-olefin interpolymer is an ethylene/$\alpha$-olefin copolymer.

In one embodiment, the ethylene/$\alpha$-olefin interpolymer has a melt index ($I_2$) from 0.1 g/10 min to 10 g/10 min, preferably from 0.1 g/10 min to 5 g/10 min, more preferably from 0.1 g/10 min to 2 g/10 min. In a further embodiment, the ethylene/$\alpha$-olefin interpolymer is an ethylene/$\alpha$-olefin copolymer.

In one embodiment, the ethylene/$\alpha$-olefin interpolymer has molecular weight distribution (Mw/Mn) from 1.1 to 4, preferably from 1.1 to 3.5, more preferably from 1.1 to 3, as determined by GPC. In a further embodiment, the ethylene/α-olefin interpolymer is an ethylene/α-olefin copolymer.

In one embodiment, the ethylene/α-olefin interpolymer is a homogeneously branched linear interpolymer, and preferably a copolymer; or a homogeneous branched substantially linear interpolymer, and preferably a copolymer.

In one embodiment, the ethylene/α-olefin interpolymer is a homogeneously branched linear interpolymer, and preferably a copolymer.

In one embodiment, the ethylene/α-olefin interpolymer is homogeneous branched substantially linear interpolymer, and preferably a copolymer.

The terms "homogeneous" and "homogeneously-branched" are used in reference to an ethylene/α-olefin interpolymer, in which the α-olefin comonomer is randomly distributed within a given polymer molecule, and all of the polymer molecules have the same or substantially the same comonomer-to-ethylene ratio.

The homogeneously branched linear ethylene interpolymers are ethylene polymers, which lack long chain branching, but do have short chain branches, derived from the comonomer polymerized into the interpolymer, and which are homogeneously distributed, both within the same polymer chain, and between different polymer chains. These ethylene/α-olefin interpolymers have a linear polymer backbone, no measurable long chain branching, and a narrow molecular weight distribution. This class of polymers is disclosed for example, by Elston in US Patent No. 3,645,992, and subsequent processes to produce such polymers, using bis-metallocene catalysts, have been developed, as shown, for example, in EP 0 129 368; EP 0 260 999; US Patent No. 4,701,432; US Patent No. 4,937,301; US Patent No. 4,935,397; US Patent No. 5,055,438; and WO 90/07526. As discussed, the homogeneously branched linear ethylene interpolymers lack long chain branching (or measurable amounts of long chain branching), just as is the case for the linear low density polyethylene polymers or linear high density polyethylene polymers, made using uniform branching distribution polymerization processes. Commercial examples of homogeneously branched linear ethylene/α-olefin interpolymers include TAFMER polymers supplied by the Mitsui Chemical Company, and EXACT and EXCEED polymers supplied by ExxonMobil Chemical Company.

The homogeneously branched substantially linear ethylene/α-olefin interpolymers are described in US Patent Nos. 5,272,236; 5,278,272; 6,054,544; 6,335,410 and 6,723,810. The substantially linear ethylene/α-olefin interpolymers have long chain branching. The long chain branches have the same comonomer distribution as the polymer backbone, and can have about the same length as the length of the polymer backbone. "Substantially linear," typically, is in reference to a polymer that is substituted, on average, with "0.01 long chain branches per 1000 carbons" to "3 long chain branches per 1000 carbons." The length of a long chain branch is longer than the carbon length of a short chain branch, formed from the incorporation of one comonomer into the polymer backbone.

The homogeneously branched substantially linear ethylene/α-olefin interpolymers form a unique class of homogeneously branched ethylene polymers. They differ substantially from the well-known class of conventional, homogeneously branched linear ethylene/α-olefin interpolymers, as discussed above, and, moreover, they are not in the same class as conventional heterogeneous "Ziegler-Natta catalyst polymerized" linear ethylene polymers (for example, ultra low density polyethylene (ULDPE), linear low density polyethylene (LLDPE) or high density polyethylene (HDPE) made, for example, using the technique disclosed by Anderson et al., in U.S. Patent 4,076,698); nor are they in the same class as high pressure, free-radical initiated, highly branched polyethylenes, such as, for example, low density polyethylene (LDPE), ethylene-acrylic acid (EAA) copolymers and ethylene vinyl acetate (EVA) copolymers.

The homogeneously branched, substantially linear ethylene/α-olefin interpolymers have excellent processability, even though they have a relatively narrow molecular weight distribution. Surprisingly, the melt flow ratio ($I_{10}/I_2$), according to ASTM D 1238, of the substantially linear ethylene interpolymers can be varied widely, and essentially independently of the molecular weight distribution (Mw/Mn or MWD). This surprising behavior is contrary to conventional homogeneously branched linear ethylene interpolymers, such as those described, for example, by Elston in U.S. 3,645,992, and heterogeneously branched conventional "Ziegler-Natta polymerized" linear polyethylene interpolymers, such as those described, for example, by Anderson et al., in U.S. 4,076,698. Unlike substantially linear ethylene interpolymers, linear ethylene interpolymers (whether homogeneously or heterogeneously branched) have rheological properties, such that, as the molecular weight distribution increases, the $I_{10}/I_2$ value also increases.

Long chain branching can be determined by using $^{13}$C Nuclear Magnetic Resonance (NMR) spectroscopy, and can be quantified using the method of Randall (Rev. Macromol. Chem. Phys., C29 (2 &3), 1989, p. 285-297). Two other methods are Gel Permeation Chromatography, couple with a Low Angle Laser Light Scattering detector (GPCLALLS), and Gel Permeation Chromatography, coupled with a Differential Viscometer detector (GPC-DV). The use of these techniques for long chain branch detection, and the underlying theories, have been well documented in the literature. See, for example, Zimm, B.H. and Stockmayer, W.H., J. Chem. Phys., 17, 1301(1949) and Rudin, A., Modern Methods of Polymer Characterization, John Wiley & Sons, New York (1991) pp. 103-112.

In contrast to "substantially linear ethylene polymer," "linear ethylene polymer" means that the polymer lacks measurable or demonstrable long chain branches, that is, the polymer is substituted with an average of less than 0.01 long chain branches per 1000 carbons.

The homogeneous branched ethylene polymers will preferably have a single melting peak, as measured using Differential Scanning Calorimetry (DSC), in contrast to heterogeneously branched linear ethylene polymers, which have two or more melting peaks, due to the heterogeneously branched polymer's broad branching distribution.

In a one embodiment, the ethylene/$\alpha$-olefin interpolymer has a PRR from -1 to 70, or from 3 to 70. In a further embodiment, the ethylene/$\alpha$-olefin interpolymer is an ethylene/$\alpha$-olefin copolymer.

Interpolymer viscosity is conveniently measured in poise (dyne-second/square centimeter (d-sec/cm2)) at shear rates within a range of 0.1-100 radian per second (rad/sec), at 190°C, under a nitrogen atmosphere, using a dynamic mechanical spectrometer (such as a RMS-800 or ARES from Rheometrics), under a dynamic sweep made from 0.1 to 100 rad/sec. The viscosities at 0.1 rad/sec and 100 rad/sec may be represented, respectively, as "V0.1" and "V100," with a ratio of the two referred to as "RR," and expressed as "V0.1/V100."

The PRR value is calculated by the formula: PRR = RR + [3.82 - interpolymer Mooney Viscosity (ML1+4 at 125°C)] x 0.3. The PRR determination is described in US Patent 6,680,361 (see also equivalent WO 00/26268).

Some commercial ethylene/$\alpha$-olefin interpolymers have PRR values less than 3. In one embodiment, the ethylene/$\alpha$-olefin interpolymer has a PRR less than 3, and preferably less than 2. In another embodiment, the ethylene/$\alpha$-olefin interpolymer has a PRR from -1 to 3, preferably from 0.5 to 3, and more preferably from 1 to 3. In a further embodiment, the ethylene/$\alpha$-olefin interpolymer is an ethylene/$\alpha$-olefin copolymer.

In one embodiment, the ethylene/$\alpha$-olefin interpolymer has a PRR greater than, or equal to 4, preferably greater than, or equal to, 8, more preferably greater than, or equal to, 12, even more preferably greater than, or equal to, 15. In a further embodiment, the ethylene/$\alpha$-olefin interpolymer is an ethylene/$\alpha$-olefin copolymer.

In one embodiment, the ethylene/$\alpha$-olefin interpolymer has a PRR greater than, or equal to 3.0, or greater than, or equal to, 3.5, or preferably greater than, or equal to, 4.0, or greater than, or equal to, 4.5. In a further embodiment, the ethylene/$\alpha$-olefin interpolymer is an ethylene/$\alpha$-olefin copolymer. In one embodiment, the ethylene/$\alpha$-olefin interpolymer has a PRR greater than, or equal to 4.0, or greater than, or equal to, 4.5, or preferably greater than, or equal to, 5.0, or greater than, or equal to, 5.5. In a further embodiment, the ethylene/$\alpha$-olefin interpolymer is an ethylene/$\alpha$-olefin copolymer.

In one embodiment, the ethylene/$\alpha$-olefin interpolymer has a PRR from 4 to 70, preferably from 8 to 70. In a further embodiment, the ethylene/$\alpha$-olefin interpolymer has a PRR from 12 to 60, preferably from 15 to 55, and more preferably from 18 to 50. In a further embodiment, the ethylene/$\alpha$-olefin interpolymer is an ethylene/$\alpha$-olefin copolymer.

In one embodiment, the ethylene/$\alpha$-olefin interpolymer has a PRR greater than, or equal to 8, preferably greater than, or equal to, 12, more preferably greater than, or equal to, 15, and a molecular weight distribution (MWD) from 1.2 to 5, more preferably from 1.5 to 4.5 and most preferably from 2.0 to 4. In a further embodiment, the ethylene/$\alpha$-olefin interpolymer is an ethylene/$\alpha$-olefin copolymer.

A list of some copolymers and interpolymers is shown in Table A below. The EAO-1, EAO-2-1, EAO-8 and EAO-9 were prepared by the procedure described in WO 00/26268. EAO-7-1 was prepared in dual reactors by the procedure described in WO 00/26268. EAO-E-A was prepared as described in U.S. Patents 5,272,236 and 5,278,272. U.S. Patents 5,272,236; 5,278,272; 6,680,361; and 6,369,176. "H-type branching" is formed by using certain diene monomers in the polymerization of terpolymers (for example, see EAO-G, EAO-H, EAO-I, and EAO-J in Table 1 below). In a preferred embodiment, the ethylene/$\alpha$-olefin interpolymer, and preferably a copolymer, does not contain this "H-type branching."

Table 1: Ethylene/$\alpha$-Olefin Interpolymers

| EAO | Mooney Viscosity | MLRA/MV | PRR | Comonomer(s) | Wt% Ethylene | Density g/cc |
|---|---|---|---|---|---|---|
| T-Branches (Low Levels) | | | | | | |
| EAO-A | 26.2 | 0.3 | -2.9 | butene | | |
| EAO-B | 48.6 | 1.2 | -5.5 | butene | | |
| T-Branches (Low to Commercial Levels) | | | | | | |
| EAO-C | 21.5 | 0.8 | 0.6 | octene | | |
| EAO-D | 34.4 | 1.2 | -0.8 | octene | | |
| EAO-E | 34.1 | 1.2 | -0.5 | octene | | |
| EAO-E-A | 32 | | 0 | octene | 58 | 0.86 |
| EAO-F | 18.3 | 0.6 | -0.5 | butene | | |

(continued)

| EAO | Mooney Viscosity | MLRA/MV | PRR | Comonomer(s) | Wt% Ethylene | Density g/cc |
|---|---|---|---|---|---|---|
| T-Branches (Low Levels) | | | | | | |
| | | | | | | |
| T-Branches (High Levels) | | | | | | |
| EAO-1 | 40.1 | 3.8 | 29 | butene | 87 | 0.90 |
| EAO-2 | 27 | 2.8 | 22 | butene | | |
| EAO-2-1 | 26 | | 19 | butene | 87 | 0.90 |
| EAO-3 | 36.8 | 2.4 | 15 | butene | | |
| EAO-4 | 17.8 | 2.3 | 12 | butene | | |
| EAO-5 | 15.7 | 2.0 | 10 | butene | | |
| EAO-6 | 37.1 | 7.6 | 70 | propylene | | |
| EAO-7 | 17.4 | 3.4 | 26 | 69.5wt% ethylene / 30wt% propylene / 0.5% ENB | 69.5 | |
| EAO-7-1 | 20 | | 21 | propylene/diene | 69.5 | 0.87 |
| EAO-8 | 26 | | 45 | propylene | 70 | 0.87 |
| EAO-9 | 30 | | 17 | octene | 70 | 0.88 |
| | | | | | | |
| H-Branches | | | | | | |
| EAO-G | 24.5 | 10.9 | | 76.8wt% ethylene / 22.3wt% propylene / 0.9% ENB | | |
| EAO-H | 27 | 7.1 | 72 | 72wt% ethylene / 22wt% propylene / 6% hexadiene | | |
| EAO-I | 50.4 | 7.1 | | 71wt% ethylene / 23wt% propylene / 6% hexadiene | | |
| EAO-J | 62.6 | 8.1 | 55 | 71wt% ethylene / 23wt% propylene / 6% hexadiene | | |
| Mooney viscosity: ML1+4 at 125°C | | | | | | |

In one embodiment, the ethylene-based polymer is an ethylene/α-olefin multi-block copolymer. Ethylene/α-olefin multi-block copolymers may be made with two catalysts, incorporating differing quantities of comonomer, and a chain shuttling agent. Preferred α-olefins include propylene, 1-butene, 1-pentene, 1-hexene, 4-methyl-1-pentene, 1-heptene, 1-octene, 1-nonene and 1-decene. The α-olefin is desirably a C3-C10 α-olefin. Preferably, the α-olefin is propylene, 1-butene, 1-hexene or 1-octene.

An ethylene/α-olefin multi-block copolymer has one or more of the following characteristics:

(1) an average block index greater than zero and up to 1.0 and a molecular weight distribution, Mw/Mn, greater than 1.3; or

(2) at least one molecular fraction which elutes between 40°C and 130°C when fractionated using TREF, characterized in that the fraction has a block index of at least 0.5 and up to 1; or

(3) an Mw/Mn from 1.7 to 3.5, at least one melting point, Tm, in degrees Celsius, and a density, d, in grams/cubic centimeter, wherein the numerical values of Tm and d correspond to the relationship:

$$Tm > -6553.3 + 13735(d) - 7051.7(d)^2;$$

or

(4) an Mw/Mn from 1.7 to 3.5, and is characterized by a heat of fusion, $\Delta H$ in J/g, and a delta quantity, $\Delta T$, in degrees Celsius defined as the temperature difference between the tallest DSC peak and the tallest CRYSTAF peak, wherein the numerical values of $\Delta T$ and $\Delta H$ have the following relationships:

$$\Delta T > -0.1299(\Delta H) + 62.81 \text{ for } \Delta H \text{ greater than zero and}$$

$$\text{up to } 130 \text{ J/g,}$$

$$\Delta T \geq 48°C \text{ for } \Delta H \text{ greater than } 130 \text{ J/g,}$$

wherein the CRYSTAF peak is determined using at least 5 percent of the cumulative polymer, and if less than 5 percent of the polymer has an identifiable CRYSTAF peak, then the CRYSTAF temperature is 30°C; or

(5) an elastic recovery, Re, in percent at 300 percent strain and 1 cycle measured with a compression-molded coated substrate of the ethylene/$\alpha$-olefin interpolymer, and has a density, d, in grams/cubic centimeter, wherein the numerical values of Re and d satisfy the following relationship when ethylene/$\alpha$-olefin interpolymer is substantially free of a cross-linked phase: Re >1481-1629(d); or

(6) a molecular fraction which elutes between 40°C and 130°C when fractionated using TREF, characterized in that the fraction has a molar comonomer content of at least 5 percent higher than that of a comparable random ethylene interpolymer fraction eluting between the same temperatures, wherein said comparable random ethylene interpolymer has the same comonomer(s) and has a melt index, density, and molar comonomer content (based on the whole polymer) within 10 percent of that of the ethylene/$\alpha$-olefin interpolymer; or

(7) a storage modulus at 25°C, G'(25°C), and a storage modulus at 100°C, G'(100°C), wherein the ratio of G'(25°C) to G'(100°C) is in the range of 1:1 to 9:1.

The term "multi-block copolymer" or "segmented copolymer" refers to a polymer comprising two or more chemically distinct regions or segments (referred to as "blocks") preferably joined in a linear manner, that is, a polymer comprising chemically differentiated units, which are joined end-to-end with respect to polymerized ethylenic functionality, rather than in pendent or grafted fashion. In a preferred embodiment, the blocks differ in the amount or type of comonomer incorporated therein, the density, the amount of crystallinity, the crystallite size attributable to a polymer of such composition, the type or degree of tacticity (isotactic or syndiotactic), regio-regularity or regio-irregularity, the amount of branching, including long chain branching or hyper-branching, the homogeneity, or any other chemical or physical property. The multi-block copolymers are characterized by unique distributions of both polydispersity index (PDI or Mw/Mn), block length distribution, and/or block number distribution due to the unique process making of the copolymers. More specifically, when produced in a continuous process, the polymers desirably possess PDI from 1.7 to 2.9, preferably from 1.8 to 2.5, more preferably from 1.8 to 2.2, and most preferably from 1.8 to 2.1. When produced in a batch or semi-batch process, the polymers possess PDI from 1.0 to 2.9, preferably from 1.3 to 2.5, more preferably from 1.4 to 2.0, and most preferably from 1.4 to 1.8.

In one embodiment, the ethylene/$\alpha$-olefin multi-block copolymer has a density of less than, or equal to, 0.900 g/cc, preferably less than, or equal to, 0.890 g/cc, more preferably less than, or equal to, 0.885 g/cc, even more preferably less than, or equal to, 0.880 g/cc.

In one embodiment, the ethylene/$\alpha$-olefin multi-block copolymer has a density greater than, or equal to, 0.850 g/cc, preferably greater than, or equal to, 0.860 g/cc, and more preferably greater than, or equal to, 0.870 g/cc. Density is measured by the procedure of ASTM D-792-08.

In one embodiment, the ethylene/$\alpha$-olefin multi-block copolymer has a melting point of greater than 90°C, preferably greater than 100°C. The melting point is measured by Differential Scanning Calorimetry (DSC) method described in U.S. Publication 2006/0199930 (WO 2005/090427).

In one embodiment, the ethylene/$\alpha$-olefin multi-block copolymer has a melt index ($I_2$) less than, or equal to, 10 g/10 min, preferably less than, or equal to 5 g/10 min, and more preferably less than, or equal to 2 g/10 min. In another embodiment, the ethylene/$\alpha$-olefin multi-block interpolymer has a melt index ($I_2$) greater than, or equal to, 0.1 g/10 min, preferably greater than, or equal to, 0.2 g/10 min, and more preferably greater than, or equal to, 0.4 g/10 min.

In another embodiment, the ethylene/$\alpha$-olefin multi-block copolymer has a melt index (I2) from 0.1 g/10 min to 10 g/10 min, preferably from 0.1 g/10 min to 5 g/10 min, and more preferably from 0.1 g/10 min to 2 g/10 min, as determined using ASTM D-1238-04 (190°C, 2.16 kg load).

The ethylene multi-block copolymers and their preparation and use, are more fully described in WO 2005/090427, US2006/0199931, US2006/0199930, US2006/0199914, US2006/0199912, US2006/0199911, US2006/0199910, US2006/0199908, US2006/0199907, US2006/0199906, US2006/0199905, US2006/0199897, US2006/0199896, US2006/0199887, US2006/0199884, US2006/0199872, US2006/0199744, US2006/0199030, US2006/0199006 and US2006/0199983.

An ethylene-based polymer may comprise a combination of two or more embodiments as described herein.

An ethylene/$\alpha$-olefin interpolymer may comprise a combination of two or more embodiments as described herein.

An ethylene/$\alpha$-olefin copolymer may comprise a combination of two or more embodiments as described herein.

An ethylene/$\alpha$-olefin multi-block copolymer may comprise a combination of two or more embodiments as described herein.

## Applications

The invention provides for an article comprising at least one component formed from an inventive composition.

Articles include, but are not limited to, films, sheets, ball bladders, shoe bladders, inflation devices, swimming pool liners, air beds, toys, cushioning bladders for furniture, and protective cushioning for animal husbandry purposes (for example, cushioning in equine stables and horse floats). The films and sheets have exceptional seal strength following HF welding, as well as good mechanical properties.

Articles can be formed by generally known methods, including, but not limited to, extrusion processes, injection molding, and compression molding.

Additional articles, each having at least one component formed from an inventive composition, include, but are not limited to, carpet components, wire sheaths, automotive parts, other footwear components, awnings, tarps, roofing materials, computer components, belts, artificial leather, artificial turf, fabrics, laminates, or injection molded parts.

## DEFINITIONS

The term "composition," as used herein, includes a mixture of materials which comprise the composition, as well as reaction products and decomposition products formed from the materials of the composition.

The term "polymer," as used herein, refers to a polymeric compound prepared by polymerizing monomers, whether of the same or a different type. The generic term polymer thus embraces the term homopolymer (employed to refer to polymers prepared from only one type of monomer), and the term interpolymer as defined hereinafter.

As discussed above, the term "interpolymer," as used herein, refers to polymers prepared by the polymerization of at least two different types of monomers. The generic term interpolymer thus includes copolymers (employed to refer to polymers prepared from two different types of monomers), and polymers prepared from more than two different types of monomers.

The term, "ethylene-based polymer," as used herein, refers to a polymer that comprises a majority amount of polymerized ethylene monomer (based on the weight of the polymer), and optionally may comprise one or more comonomers.

The term, "ethylene/$\alpha$-olefin interpolymer," as used herein, refers to an interpolymer that comprises a majority amount of polymerized ethylene monomer (based on the weight of the interpolymer), and at least one $\alpha$-olefin. As used in the context of this disclosure, ethylene/$\alpha$-olefin interpolymer excludes ethylene/$\alpha$-olefin multi-block interpolymers.

The term, "ethylene/$\alpha$-olefin copolymer," as used herein, refers to a copolymer that comprises a majority amount of polymerized ethylene monomer (based on the weight of the copolymer), and an $\alpha$-olefin, as the only two monomer types. As used in the context of this disclosure, ethylene/$\alpha$-olefin copolymer excludes ethylene/$\alpha$-olefin multi-block copolymers.

The term, "propylene-based polymer," as used herein, refers to a polymer that comprises a majority amount of polymerized propylene monomer (based on the weight of the polymer), and optionally may comprise one or more comonomers.

The term "chlorinated ethylene-based polymer," as used herein, refers to an ethylene-based polymer that contains bonded chloro groups. These polymers are typically prepared by subjecting an ethylene-based polymer to a chlorination reaction.

The term "thermoplastic polymer," "thermoplastic composition" and similar terms, as used herein, refer to a polymer or polymer composition that is substantially thermally extrudable or deformable, albeit relatively aggressive conditions may be required. The terms "comprising," "including," "having," and their derivatives, are not intended to exclude the presence of any additional component, step or procedure, whether or not the same is specifically disclosed. In order to avoid any doubt, all compositions claimed through use of the term "comprising" may include any additional additive, adjuvant, or compound, whether polymeric or otherwise, unless stated to the contrary. In contrast, the term, "consisting essentially of" excludes from the scope of any succeeding recitation any other component, step or procedure, excepting those that are not essential to operability. The term "consisting of" excludes any component, step or procedure not specifically delineated or listed.

## TEST METHODS

Density

Density is measured in accordance with ASTM D-792-08.

Melt Index

Melt index ($I_2$, or I2) for the ethylene-based polymers, in g/10 min, was measured using ASTM D-1238-04 (Condition 190°C/2.16 kg). The notation "$I_{10}$ (or I10)" refers to a melt index, in g/10 min, measured using ASTM D-1238-04, Condition 190°C/10.0 kg. The notation "$I_{21}$ (or I21)" refers to a melt index, in g/10 min, measured using ASTM D-1238-04, Condition 190°C/21.6 kg. For propylene-based polymers, the melt flow rate (MFR) was measured using ASTM D-1238-04 (Condition 23°0C/2.16 kg).

Chlorine Content of Chlorinated Ethylene-based Polymer (CPE)

The polymer chlorine content can be measured by thermogravimetric analyses (TGA), using a TA Instrument Model 2950 Thermogravimetric Analyzer. Using tweezers to handle sample pans, each sample pan is cleaned, dried, and tarred. The procedure requires the bottom of each pan to be covered by the sample (typically 15-20 mg). After the pan is positioned on the instrument platform, the software-controlled analysis is initiated. The chlorine analysis is configured to sweep the furnace with nitrogen, equilibrate at 50°C for one minute, equilibrate at 110°C for five minutes, and ramp at a 50°C/minute rate to 450°C. Then the furnace gas switches to air, and the heating continues to 750°C, and a five minute equilibration. The instrument reports the chlorine content based on a calibrated sample weight loss.

Differential Scanning Calorimetry- Chlorinated Ethylene-based Polymers (CPEs)

Differential Scanning Calorimetry (DSC) can be performed with the TA Instruments Model Q1000 Series instrument. Polymer sample is pre-dried to less than 0.5 weight percent (based on total weight of polymer) volatiles (as determined by TGA), before the polymer is analyzed by DSC. The test procedure involves weighing about ten milligrams of polymer into a tared DSC pan on a Cahn Microbalance. The lid is crimped on the pan to ensure a closed atmosphere. The sample pan is placed in a DSC cell, and cooled to -50°C. The sample is kept at this temperature for one minute, and then heated, at a rate of approximately 10°C/min, to a temperature of around 180°C. The sample is kept at this temperature for one minute. Then the sample was cooled at a rate of 10°C/min to -50°C, and kept isothermally at that temperature for one minute. The sample was next heated at a rate of 10°C/min, until complete melting (second heat; around 180°C). Unless otherwise stated, the melting point (Tm) and the polymer's "residual (e.g., HDPE) crystallinity" are determined from the first heat curve, obtained from DSC, by integrating the thermal response between 110°C and 150°C. The crystallization temperature (Tc) is measured from the first cooling curve. The Tm is the temperature measured at the peak of the endotherm, as shown on the heating curve. The Tc is the temperature measured at the peak of the exotherm, as shown on the cooling curve.

The "residual (e.g., HDPE) crystallinity (J/g)" refers to the crystallinity in the chlorinated polymer, as measured by DSC, at approximately the same temperature range used to measure the crystallinity in the original (e.g., HDPE) base polymer (crystallization peak typically in the region from 110°C to 150°C). The "percent crystallinity" is the weight percentage of crystallinity (or residual crystallinity) in the chlorinated polymer, excluding the weight of bound chlorine. For the purposes of calculation, the heat of fusion of 100 percent crystalline polyethylene, by DSC, is 292 J/g. A similar method is described in US Patent 6, 124,406. In this case, the polymer percent crystallinity is referenced against the 100 percent crystallinity value. An example of the percent crystallinity calculation is as follows: the enthalpy of fusion for a chlorinated ethylene-based polymer, containing 36 weight percent chlorine (based on the total weight of polymer), was measured by DSC to be $\Delta H_f$ = 5 Joules/gram. To correct for the chlorine incorporated into the polymer, the $\Delta H_f$ corrected = 5/0.64 = 7.8 Joules/gram (0.64 = 1 - 0.36 (weight fraction chlorine)). The percent crystallinity referenced against a 100 percent crystallinity value becomes 7.8/292 x 100 = 2.7 percent crystallinity.

Melt Viscosity (Poise) - CPE

Melt viscosity can be measured using a conventional capillary rheometer (for example, a KAYENESS Capillary Rheometer or a GOETTFERT Capillary Rheometer). The sample size is typically an amount, in the melt state, to fill the rheometer barrel. The polymer needs to be appropriately stabilized, for example, the polymer can be compounded with 0.4-0.6 wt% stearic acid, 1-3 wt% metal stearate, and 2.5-3.5 wt% of an epoxidized oil (weight percentages based on final composition). The melt viscosity is measured, using a 1 mm die with an L/D of 40 (90 degree entrance angle), at 190°C. The melt viscosity is reported at a shear rate of 145 sec$^{-1}$.

Differential Scanning Calorimetry- Ethylene-based Polymers

Differential Scanning Calorimetry (DSC) can be used to measure melting temperature, crystallization temperature, and crystallinity of ethylene-based polymer (PE) samples and propylene-based polymer (PP) samples. Five to eight mg of sample is weighed and placed in a DSC pan. The lid is crimped on the pan to ensure a closed atmosphere. The sample pan is placed in a DSC cell, and then heated, at a rate of approximately 10°C/min, to a temperature of 180°C for PE (230°C for PP). The sample is kept at this temperature for three minutes. Then the sample is cooled at a rate of 10°C/min to -60°C for PE (-40°C for PP), and kept isothermally at that temperature for three minutes. The sample is next heated at a rate of 10°C/min until complete melting (second heat). The percent crystallinity is calculated by dividing the heat of fusion (Hf), determined from the second heat curve, by a theoretical heat of fusion of 292 J/g for PE (165 J/g, for PP), and multiplying this quantity by 100 (for example, % cryst. = (Hf / 292 J/g) x 100 (for PE)).

Unless otherwise stated, melting point(s) (Tm) of each polymer sample is determined from the second heat curve obtained from DSC, as described above. The crystallization temperature (Tc) is measured from the first cooling curve. The Tm is the temperature measured at the peak of the endotherm, as shown on the heating curve. The Tc is the temperature measured at the peak of the exotherm, as shown on the cooling curve.

Rheology Measurements for PRR (Processing Rheology Ratio) Determination

The rheology ratio, RR ($V_{0.1}$ /$V_{100}$), was determined using a Rheometric Scientific, Inc. ARES (Advanced Rheometric Expansion System) Dynamic Mechanical Spectrometer (DMS). The samples were examined at 190°C, using the dynamic frequency mode, and using "25 millimeter (mm) diameter" parallel plate fixtures with a 2 mm gap. With a strain rate of 8%, and an oscillatory rate that was incrementally increased from 0.1 to 100 rad/sec, five data points were taken for each decade of frequency analyzed. Each sample (either pellets or bale) was compression molded into "1.18 centimeter (3 inch)" plaques (0.049 cm (1/8 inch) thick), at 137.9 megapascals (MPa) (20,000 psi) pressure, for one minute, at 180°C. The plaques were quenched and cooled to room temperature, over a period of one minute. A "25 mm diameter" plaque was cut from the center portion of the larger plaque. This plaque was inserted into the ARES, equilibrated at 190°C, and allowed to equilibrate for five minutes prior to initiation of the test. The sample was maintained in a nitrogen environment throughout the analysis to minimize oxidative degradation. Data reduction and manipulation were performed by the ARES2/A5:RSI Orchestrator Windows 95 based software package. The PRR is calculated from the Mooney Viscosity and the RR in accordance with the following formula provided above: PRR = RR + [3.82 - interpolymer Mooney Viscosity (ML1+4 at 125°C)] x 0.3.

Mooney Viscosity

Mooney Viscosity, MV, (ML 1+4 at 125°C) was measured in accordance ASTM D 1646-04. ML refers to Mooney Large Rotor. The viscometer was a Monsanto MV2000 instrument.

Welding Strength

Two "0.3 mm thick" sheets (prepared using the two roll mixer discussed below) were placed together, with about "10 mm width" overlapped. High frequency, micro-wave welding equipment was used to weld the overlapped section of the film to a "0.24 -0.36 mm" final thickness. The welding time was about five seconds. Using a die cutter, the welded film was cut into a "dog bone-shaped" test specimen, with the welded area in the middle of the test specimen. Tensile strength was tested with a test speed at 200 mm/min.

Mechanical Properties

Tensile properties were measured according to ASTM D638, with a test speed of 200 mm/min. A sheet (prepared from two roll mixer, as discussed below) was cut into "dog bone shaped" test specimens using a die cutter.
Puncture resistance was measure according to ASTM D5748, with a test speed of 200 mm/min and diameter of probe of 1 mm. A section of a sheet prepared from two roll mixer, as discussed below, was examined.
Tear strength was measured according to ASTM D624, with a test speed of 500 mm/min. Sheet (prepared from two roll mixer, as discussed below) was cut into "C shaped" test specimens using die cutter.

Abrasion test was measured according to ASTM D3884. Sheet (prepared from two roll mixer, as discussed below) was cut into "120 mm diameter" discs for testing.

Heat Resistance

The heat resistance of a sheet (prepared from two roll mixer, as discussed below) was examined. The test specimen was two sections of sheet (30-40 cm x 40-50 cm) that were overlapped, and placed between two metal plates. A pressure of 0.25 kg/cm$^2$ was applied to the plates, and the temperature of the plates was increased to 60°C. The film sections were thermally treated at these conditions for seven days. After the thermal treatment, the film sections were examined visually for points of adherence (stick points). If there were less than three stick points in a "30 cm x 30 cm" area of sheet overlap, the test specimen passed this test.

Stress Whitening

Stress whitening tests were carried out on sheets made directly from a two-roll mill mixer, as discussed below. The sheets were scratched by finger nails, as is commonly done in the industry. The surface of the sheet was then visually inspected to determine if the sheet was white in color along the scratch marks.

Chlorine Content of the Composition

The chlorine content of the composition was based on a summation of the chlorine content for each polymer component of the composition. For example, for Example 1 (CPE-2 at 50 wt%/E086 at 15 wt%/OBC 90 at 35 wt%) in Table 3 below, the chlorine content was determined as follow: chlorine content = (36*0.5/100)*100%=18%. Note, the chlorine content for CPE-2 is 36 weight percent (average value).

The following examples illustrate the present invention, but are not intended to limit the scope of the invention.

**EXAMPLES**

The polymers shown in Table 2 were used in this study. Each polymer is typically stabilized with one or more antioxidants.

*Sample Preparation*

Polymer formulations are shown in Table 3 below. Each formulation was compounded in a conventional laboratory, two-roll mill mixer (RELIABLE two roll mill mixer). The temperature for two-roll mill was set as 160°C. After 5-8 minutes of compounding, the compounded material was drawn into about "0.2-0.5 mm sheet" for testing, using the two roll mill mixer.

The welding strength of each sheet was measured, and the results are reported in Table 3. In addition, the mechanical properties, abrasion resistance, heat resistance and stress whitening of each sheet were measured/examined. These results are also shown in Table 3.

As shown in Table 3, all inventive examples had excellent properties, including a welding strength > 6 MPa (the minimum weldablity requirement in industry). Each inventive example passed the heat resistance test at 60°C, and showed no or minimal stress whitening. The inventive examples comprising a CPE (CPE-1 (TYRIN 3615), CPE-2 (TYRIN 3611 CPE), CPE-3 (TYRIN 4211 CPE), each available from The Dow Chemical Company), and an ethylene-based copolymer (especially EO86 (ENR 7086.01 Developmental POE) and EO80 (ENGAGE 8480 POE), each available from The Dow Chemical Company)) had good "high frequency welding strength," good heat resistance, and good puncture strength. Compared to the conventional PVC-based composition (Comparative Example 1), the inventive examples achieved comparable heat resistant at 60°C, comparable welding strength of greater than 7MPa, and comparable stress whitening performance. In addition, the inventive examples also had better abrasion resistance compared to the comparative PVC-based composition. The Inventive Example 4 showed better puncture strength and abrasion resistance, and comparable tear strength and welding strength, as compared to the incumbent PVC based composition. Comparative Example 2 with an "11.8 weight percent chlorine content" was not weldable by high frequency.

Table 2: Polymers and Additives

| Polymer | Type | Density (g/cm3) | Chlorine content of CPE (wt%) | I$_2$ or MFR (dg/min) | Melt Viscosity (P = Poise) | Tm (°C) |
|---|---|---|---|---|---|---|
| CPE-1 | Chlorinated Polyethylene | | 36 ± 2 | | 21K-30K | |
| CPE-2 | Chlorinated Polyethylene | 1.17 | 36 ± 2 | | 6K-10.5K | |
| CPE-3 | Chlorinated Polyethylene | | 42 ± 2 | | 8K-12K | |
| PP30 | Propylene/ethylene copolymer[g] | 0.889 - 0.893 | | 6.4 - 9.6 (MFR) | | |
| EO86 | Ethylene/octene copolymer * PRR = 26 (ave. value) | 0.898 - 0.904 | | <0.5 (I2) | | 93 |
| EO80 | Ethylene/octene copolymer * PRR = 8 (ave. value) | 0.899 - 0.905 | | 0.75 - 1.25 (I2) | | 99 |
| LLDPE 45 | Ethylene/octene copolymer ** | 0.918 - 0.922 | | 0.85 - 1.15(I2) | | 122 |
| OBC 90 | Ethylene/octene multiblock copolymer*** | 0.875 - 0.879 | | 0.38 - 0.62 (I2) | | 120 |
| CaCO3[a] (360 mesh) | | | | | | |
| Talc[b] (1250 mech) | | | | | | |
| MgO[c] (7-11 um) | | | | | | |
| PVC with polymer degree 1300[d] | | | | | | |
| Diisononyl Phthalate (DINP)[e] | | | | | | |
| Ba/Zn stabilizer[f] | | | | | | |

a) Available from Shanghai Jianghu Titanium White Product Co. Ltd..
b) Available from Jiecai Trading(Shanghai)Co., Ltd..
c) Available from Sinapharm Chemical Reagent Co., Ltd..
d) Available from Formosa Plastics Group.
e) Available from ExxonMobil.
f) Available from Xiamen Lianyang Chemical Co., Ltd..
g) VERSIFY 3000 resin, available from The Dow Chemical Company.
* Homogeneously branched substantially linear.
** Heterogeneously branched linear (DOWLEX 2045 PE, available from The Dow Chemical Company).
*** INFUSE 9000 OBC, available from The Dow Chemical Company.

Table 3: Formulations and Properties of Inventive Examples and Comparative Examples (parts by weight)

| Component (g) | Ex. 1 | Ex. 2 | Ex. 3 | Ex. 4 | Ex. 5 | Ex. 6 | Comp. Ex. 1 | Comp. Ex. 2 |
|---|---|---|---|---|---|---|---|---|
| EO80 | | | | | 50 | | | |
| CPE-1 | | | | | 50 | | | |

(continued)

| Component (g) | Ex. 1 | Ex. 2 | Ex. 3 | Ex. 4 | Ex. 5 | Ex. 6 | Comp. Ex. 1 | Comp. Ex. 2 |
|---|---|---|---|---|---|---|---|---|
| CPE-3 | | | | 45 | | 72 | | 28 |
| CPE-2 | 50 | 50 | 50 | | | | | |
| OBC 90 | 35 | 40 | 40 | | | | | |
| EO86 | 15 | | | 55 | | 28 | | 72 |
| PP30 | | | 10 | | | | | |
| LLDPE 45 | | 10 | | | | | | |
| Chlorine content of composition, based on polymer components (wt%) | 18 | 18 | 18 | 18.9 | 18 | 30.2 | 57.5** | 11.8 |
| CaCO3 (45 um) | 10 | 10 | 10 | | | | 10 | |
| Talc (45 um) | 5 | 5 | 5 | | | | | |
| MgO (7-11 um) | 5 | 5 | 5 | 8 | | | | |
| Irganox™ 1010 from Ciba | 0.2 | 0.2 | 0.2 | 0.2 | 0.2 | 0.2 | | 0.2 |
| S-70 PVC from Formosa Plastics Group | | | | | | | 100 | |
| 'DINP | | | | | | | 70 | |
| Ba/Zn stabilizer | | | | | 3 | | 3 | 3 |
| Sheet Properties | | | | | | | | |
| Welding strength*(MPa) | 8.7 | 7.4 | 7.7 | 9.7 | 12 | 13 | 9.6 | Not HF weldable |
| Tensile strength (MPa) | 13.8 | 13.8 | 12.9 | 15.7 | 24 | 16 | 18.6 | n/a |
| Elongation % | 763 | 800 | 781 | 450 | 830 | 480 | 300 | 700 |
| Tear strength (kN/m) | 35.3 | 36.6 | 36.6 | 50.94 | 57 | 47 | 52.8 | 74 |
| Puncture strength (Φ1 mm) (kg/cm2) | 2.34 | 2.5 | 2.6 | 5.5 | 5.5 | n/a | 3.5 | n/a |
| Abrasion index (mg/r) | 0.042 | 0.039 | 0.04 | 0.036 | n/a | n/a | 0.066 | n/a |
| Heat resistance at 60°C | Pass | Pass | Pass | Pass | Pass | Pass | Pass | n/a |
| Stress whitening | light | light | light | no | light | light | no | light |

* Industry requirement for welding strength of at least 6 MPa, better 7MPa.
** Chlorine content calculation: (36.5/(36.5 + 12*2 + 1*3)) * 100% = 57.5%.

**Claims**

1. A composition comprising the following:

A) 30 to 80 wt%, based on the weight of the polymer components of the composition, of a chlorinated ethylene-based polymer; and
B) 20 to 70 wt%, based on the weight of the polymer components of the composition, of an ethylene-based polymer wherein the ethylene-based polymer is an ethylene/α-olefin interpolymer or an ethylene/α-olefin multi-block polymer;

wherein the total chlorine content of the composition is greater than, or equal to, 13 weight percent, based on the total weight of polymers in the composition; and
wherein the composition comprises less than 1 wt% of a polyvinyl chloride.

2. The composition of Claim 1, wherein the chlorine content of the composition is from 13 to 40 weight percent, based on the total weight of polymers in the composition.

3. The composition of any of the previous claims, wherein the ethylene-based polymer of Component B has a melting point (Tm) greater than 60°C, preferably greater than 70°C.

4. The composition of any of the previous claims, wherein the composition does not contain a plasticizer.

5. The composition of any of the previous claims, wherein Components A and B are present in an amount greater than 60 weight percent, preferably greater than 65 weight percent, based on the weight of the composition.

6. The composition of any of the previous claims, wherein the ethylene-based polymer of Component B has a melt index ($I_2$) from 0.1 to 10.

7. The composition of any of the previous claims, wherein the ethylene-based polymer of Component B has a density from 0.855 g/cc to 0.910 g/cc.

8. The composition of any of the previous claims, wherein the ethylene-based polymer of Component B is an ethylene/a-olefin interpolymer.

9. The composition of Claim 8, wherein the ethylene/$\alpha$-olefin interpolymer is a homogeneously branched substantially linear ethylene/$\alpha$-olefin interpolymer.

10. The composition of Claim 9, wherein the ethylene/$\alpha$-olefin interpolymer has a PRR value greater than, or equal to, 8, preferably greater than, or equal to, 12, more preferably greater than, or equal to, 15.

11. The composition of any of Claims 1-7, wherein the ethylene-based polymer is an ethylene/$\alpha$-olefin multi-block copolymer.

12. An article comprising at least one component formed from the composition of any of the previous claims.

13. The article of Claim 12, wherein the article is a sheet.

14. The article of Claim 12 or Claim 13, wherein the article has a weld strength greater than 6 MPa, preferably greater than 7 MPa.

**Patentansprüche**

1. Eine Zusammensetzung, die Folgendes beinhaltet:

A) zu 30 bis 80 Gew.-%, bezogen auf das Gewicht der Polymerkomponenten der Zusammensetzung, ein chloriertes ethylenbasiertes Polymer; und
B) zu 20 bis 70 Gew.-%, bezogen auf das Gewicht der Polymerkomponenten der Zusammensetzung, ein ethylenbasiertes Polymer, wobei das ethylenbasierte Polymer ein Ethylen/$\alpha$-Olefin-Mischpolymer oder ein Ethylen/a-Olefin-Multiblockpolymer ist;

wobei der Gesamtchlorgehalt der Zusammensetzung größer als oder gleich 13 Gewichtsprozent, bezogen auf das Gesamtgewicht der Polymere in der Zusammensetzung, ist; und
wobei die Zusammensetzung zu weniger als 1 Gew.-% ein Polyvinylchlorid beinhaltet.

2. Zusammensetzung gemäß Anspruch 1, wobei der Chlorgehalt der Zusammensetzung von 13 bis 40 Gewichtsprozent, bezogen auf das Gesamtgewicht der Polymere in der Zusammensetzung, beträgt.

3. Zusammensetzung gemäß einem der vorhergehenden Ansprüche, wobei das ethylenbasierte Polymer der Komponente B einen Schmelzpunkt (Tm) von mehr als 60 °C, vorzugsweise mehr als 70 °C, aufweist.

4. Zusammensetzung gemäß einem der vorhergehenden Ansprüche, wobei die Zusammensetzung keinen Weichmacher enthält.

5. Zusammensetzung gemäß einem der vorhergehenden Ansprüche, wobei die Komponenten A und B in einer Menge von mehr als 60 Gewichtsprozent, vorzugsweise mehr als 65 Gewichtsprozent, bezogen auf das Gewicht der Zusammensetzung, vorliegen.

6. Zusammensetzung gemäß einem der vorhergehenden Ansprüche, wobei das ethylenbasierte Polymer der Komponente B einen Schmelzindex ($I_2$) von 0,1 bis 10 aufweist.

7. Zusammensetzung gemäß einem der vorhergehenden Ansprüche, wobei das ethylenbasierte Polymer der Komponente B eine Dichte von 0,855 g/cm$^3$ bis 0,910 g/cm$^3$ aufweist.

8. Zusammensetzung gemäß einem der vorhergehenden Ansprüche, wobei das ethylenbasierte Polymer der Komponente B ein Ethylen/$\alpha$-Olefin-Mischpolymer ist.

9. Zusammensetzung gemäß Anspruch 8, wobei das Ethylen/$\alpha$-Olefin-Mischpolymer ein homogen verzweigtes, im Wesentlichen lineares Ethylen/$\alpha$-Olefin-Mischpolymer ist.

10. Zusammensetzung gemäß Anspruch 9, wobei das Ethylen/$\alpha$-Olefin-Mischpolymer einen PRR-Wert von mehr als oder gleich 8, vorzugsweise mehr als oder gleich 12, noch besser mehr als oder gleich 15, aufweist.

11. Zusammensetzung gemäß einem der Ansprüche 1-7, wobei das ethylenbasierte Polymer ein Ethylen/$\alpha$-Olefin-Multiblockcopolymer ist.

12. Ein Artikel, der mindestens eine Komponente, die aus der Zusammensetzung gemäß einem der vorhergehenden Ansprüche gebildet ist, beinhaltet.

13. Artikel gemäß Anspruch 12, wobei der Artikel eine Folie ist.

14. Artikel gemäß Anspruch 12 oder Anspruch 13, wobei der Artikel eine Bindenahtfestigkeit von mehr als 6 MPa, vorzugsweise mehr als 7 MPa, aufweist.

**Revendications**

1. Une composition comprenant ce qui suit :

    A) de 30 à 80 % en poids, rapporté au poids des constituants polymères de la composition, d'un polymère à base d'éthylène chloré ; et
    B) de 20 à 70 % en poids, rapporté au poids des constituants polymères de la composition, d'un polymère à base d'éthylène, le polymère à base d'éthylène étant un interpolymère d'éthylène/$\alpha$-oléfine ou un polymère multibloc d'éthylène/$\alpha$-oléfine ;

    où la teneur en chlore totale de la composition est supérieure, ou égale, à 13 pour cent en poids, rapporté au poids total de polymères dans la composition ; et
    où la composition comprend moins de 1 % en poids d'un chlorure de polyvinyle.

2. La composition de la revendication 1, où la teneur en chlore de la composition va de 13 à 40 pour cent en poids, rapporté au poids total de polymères dans la composition.

3. La composition de n'importe lesquelles des revendications précédentes, où le polymère à base d'éthylène du Constituant B a un point de fusion (Tm) supérieur à 60 °C, de préférence supérieur à 70 °C.

4. La composition de n'importe lesquelles des revendications précédentes, où la composition ne contient pas de plastifiant.

**5.** La composition de n'importe lesquelles des revendications précédentes, où les Constituants A et B sont présents dans une quantité supérieure à 60 pour cent en poids, de préférence supérieure à 65 pour cent en poids, rapporté au poids de la composition.

**6.** La composition de n'importe lesquelles des revendications précédentes, où le polymère à base d'éthylène du Constituant B a un indice de fluidité à chaud ($I_2$) allant de 0,1 à 10.

**7.** La composition de n'importe lesquelles des revendications précédentes, où le polymère à base d'éthylène du Constituant B a une masse volumique allant de 0,855 g/cm$^3$ à 0,910 g/cm$^3$.

**8.** La composition de n'importe lesquelles des revendications précédentes, où le polymère à base d'éthylène du Constituant B est un interpolymère d'éthylène/$\alpha$-oléfine.

**9.** La composition de la revendication 8, où l'interpolymère d'éthylène/$\alpha$-oléfine est un interpolymère d'éthylène/$\alpha$-oléfine substantiellement linéaire ramifié de façon homogène.

**10.** La composition de la revendication 9, où l'interpolymère d'éthylène/$\alpha$-oléfine a une valeur PRR supérieure, ou égale, à 8, de préférence supérieure, ou égale, à 12, plus préférablement supérieure, ou égale, à 15.

**11.** La composition de n'importe lesquelles des revendications 1 à 7, où le polymère à base d'éthylène est un copolymère multibloc d'éthylène/$\alpha$-oléfine.

**12.** Un article comprenant au moins un constituant formé à partir de la composition de n'importe lesquelles des revendications précédentes.

**13.** L'article de la revendication 12, où l'article est un feuillet.

**14.** L'article de la revendication 12 ou de la revendication 13, où l'article a une force de soudage supérieure à 6 MPa, de préférence supérieure à 7 MPa.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20040077791 A1
- US 5446064 A
- US 20030153687 A
- CN 88104293
- JP 2000273254 A
- US 20040236022 A
- US 4698392 A
- US 6162865 A
- WO 2008002952 A
- JP 11157398 A
- US 4412448 A
- US 4767823 A
- US 5242987 A
- US 62043346706815 A
- US 3645992 A, Elston
- EP 0129368 A
- EP 0260999 A
- US 4701432 A
- US 4937301 A
- US 4935397 A
- US 5055438 A
- WO 9007526 A
- US 5272236 A
- US 5278272 A
- US 6054544 A
- US 6335410 A
- US 6723810 A
- US 4076698 A, Anderson
- US 6680361 B
- WO 0026268 A
- US 6680361 A
- US 6369176 A
- US 20060199930 A
- WO 2005090427 A
- US 20060199931 A
- US 20060199914 A
- US 20060199912 A
- US 20060199911 A
- US 20060199910 A
- US 20060199908 A
- US 20060199907 A
- US 20060199906 A
- US 20060199905 A
- US 20060199897 A
- US 20060199896 A
- US 20060199887 A
- US 20060199884 A
- US 20060199872 A
- US 20060199744 A
- US 20060199030 A
- US 20060199006 A
- US 20060199983 A
- US 6124406 A

### Non-patent literature cited in the description

- **RANDALL.** *Rev. Macromol. Chem. Phys.,* 1989, vol. C29 (2, 3), 285-297
- **ZIMM, B.H. ; STOCKMAYER, W.H.** *J. Chem. Phys.,* 1949, vol. 17, 1301
- **RUDIN, A.** Modern Methods of Polymer Characterization. John Wiley & Sons, 1991, 103-112